# EUROPEAN PATENT APPLICATION

(11) **EP 3 531 030 A1**
(43) Date of publication of application: **28.08.2019**
(21) Application number: 18775084.9
(22) Date of filing: 22.03.2018
(51) Int. Cl.: F24D 3/00, F24D 3/18, F24H 4/02

(54) **HEATING DEVICE AND HEATING METHOD**

(30) Priority: 30.03.2017 JP 2017067487
(71) Applicant: Mitsubishi Heavy Industries Thermal Systems, Ltd., Tokyo 108-8215 (JP)
(72) Inventor: KOSAKA Masatomo, Tokyo 108-8215 (JP); FUJINO Tetsuji, Tokyo 108-8215 (JP)
(74) Representative: Cabinet Beau de Loménie
(86) International application number: PCT/JP2018/011456
(87) International publication number: WO 2018/180903

(57) **Abstract**

This heating device (1) is provided with: a flow adjusting unit (10) which is provided in an area on the inlet (3a)-side of a load-side heat exchanger (3)where a return flow path (6) and a circulation path (5) are connected, and which can adjust a first flow rate (Q1), which is a flow rate of water (W) from the outlet (3b) of the load-side heat exchanger (3) via the return flow path (6) towards the inlet (3a) of the load-side heat exchanger (3), and a second flow amount (Q2), which is the flow rate of water (W) from the outlet (2b) of a heat exchanger (2), in which CO₂, the refrigerant, circulates repeatedly undergoing condensation and evaporation, to the inlet (3a) of the load-side heat exchanger (3); and a control unit (11) which actuates the flow adjustment unit (10) depending on the temperature of the environment in which the load-side heat exchanger (3) is installed and adjusts the ratio of the first flow amount (Q1) and the second flow amount (Q2).

## Description

### Technical Field

The present invention relates to a heating device using a CO₂ refrigerant and a method for heating a heating target liquid.

Priority is claimed on Japanese Patent Application No. 2017-067487 filed on March 30, 2017, the contents of which are incorporated herein by reference.

### Background Art

Known in the related art is a heat pump using CO₂ (carbon dioxide), which is called a natural refrigerant with a small environmental load (see PTL 1).

Because of the characteristics of CO₂, such a heat pump is a system that is highly effective for a transient heating operation in a high-temperature state. Accordingly, operation with a small inlet-outlet temperature difference in a low-temperature state leads to a significant and problematic decline in coefficient of performance (COP).

In a case where the load side of the heat pump is, for example, floor heating, the temperature of the medium (such as water) that is used for heat exchange between the heat pump and the floor heating becomes relatively low since the floor heating is low in temperature and load. Accordingly, the difference between the temperatures at the inlet and the outlet of the heat pump of this medium decreases, and the use of the CO₂ refrigerant heat pump for a low load such as the floor heating leads to a decline in the efficiency (COP) of the heat pump.

Used nowadays in this regard is a system that lowers the temperature of a medium by, for example, stirring the medium (water) in a hot water storage tank with a mixing valve. By the system being used, a decline in operation efficiency can be prevented and low-temperature circulation heating operation such as floor heating can be performed even when a CO₂ refrigerant heat pump is used.

### Citation List

### Patent Literature

[PTL 1] Japanese Unexamined Patent Application Publication No. 2010-101549

### Summary of Invention

### Technical Problem

In a case where such a CO₂ refrigerant heat pump system is used, however, only a medium that is constant in temperature and flow rate can be supplied to a load. In a case where the load of the heat pump is floor heating, the temperature of the medium that is returned from the load seasonally varies. In a season that is not so cold, in particular, the amount of heat exchange at the floor heating as a load decreases and the temperature of the medium returned from the load rises. As a result, the temperature of the medium at the inlet of the heat pump rises and the difference between the heat pump inlet and outlet temperatures decreases.

In this regard, the present invention provides a heating device and a heating method allowing high efficiency to be maintained even in the case of load variations.

### Solution to Problem

A heating device according to a first aspect of the present invention includes a heat exchange part including a refrigerant circuit in which CO₂ as a refrigerant circulates while repeating condensation and evaporation, heating a heating target liquid introduced from an inlet, and discharging the heating target liquid from an outlet, a circulation path connected to the inlet and the outlet of the heat exchange part and allowing the heating target liquid to circulate, a load side heat exchanger cooling the heating target liquid by performing heat exchange with the heating target liquid in the circulation path, a return flow path connecting the circulation path between an inlet side and an outlet side of the load side heat exchanger, a flow rate regulating section provided at a connecting part between the return flow path and the circulation path on the inlet side of the load side heat exchanger and capable of regulating a first flow rate and a second flow rate, the first flow rate being a flow rate of the heating target liquid flowing from the outlet of the load side heat exchanger toward the inlet of the load side heat exchanger via the return flow path and the second flow rate being a flow rate of the heating target liquid flowing from the outlet of the heat exchange part toward the inlet of the load side heat exchanger, and a control unit regulating a ratio between the first flow rate and the second flow rate by operating the flow rate regulating section in accordance with a temperature of an environment in which the load side heat exchanger is installed.

According to the heating device, the ratio between the first flow rate and the second flow rate of the heating target liquid can be regulated by the flow rate regulating section being controlled in accordance with the temperature of the environment of the load side heat exchanger. Accordingly, the first flow rate of the heating target liquid flowing back into the inlet of the load side heat exchanger via the return flow path from the outlet of the load side heat exchanger is caused to become smaller than the second flow rate of the heating target liquid flowing into the inlet of the load side heat exchanger from the outlet of the heat exchange part when, for example, the temperature of the environment of the load side heat exchanger has risen. Then, the temperature of the heating target liquid at the inlet of the load side heat exchanger can be lowered. As a result, it is possible to avoid the temperature of the heating target liquid at the outlet of the load side heat exchanger rising with the temperature of the environment in which the load side heat exchanger is installed. Accordingly, the temperature of the heating target liquid that is introduced from the outlet of the load side heat exchanger into the inlet of the heat exchange part can be kept low.

A heating device according to a second aspect of the present invention includes a heat exchange part including a refrigerant circuit in which CO₂ as a refrigerant circulates while repeating condensation and evaporation, heating a heating target liquid introduced from an inlet, and discharging the heating target liquid from an outlet, a circulation path connected to the inlet and the outlet of the heat exchange part and allowing the heating target liquid to circulate, a load side heat exchanger cooling the heating target liquid by performing heat exchange with the heating target liquid in the circulation path, a return flow path connecting the circulation path between an inlet side and an outlet side of the load side heat exchanger, a first flow rate regulating section provided at a connecting part between the return flow path and the circulation path on the inlet side of the load side heat exchanger and capable of regulating a first flow rate and a second flow rate, the first flow rate being a flow rate of the heating target liquid flowing from the outlet of the load side heat exchanger toward the inlet of the load side heat exchanger via the return flow path and the second flow rate being a flow rate of the heating target liquid flowing from the outlet of the heat exchange part toward the inlet of the load side heat exchanger, a second flow rate regulating section provided between the first flow rate regulating section and the outlet of the load side heat exchanger and capable of regulating the flow rate of the heating target liquid on the outlet side of the load side heat exchanger, an outlet side control unit regulating the flow rate of the heating target liquid on the outlet side of the load side heat exchanger by operating the second flow rate regulating section such that a difference between a temperature of the heating target liquid on the inlet side of the load side heat exchanger and a temperature of the heating target liquid on the outlet side of the load side heat exchanger is kept constant, and an inlet side control unit regulating a ratio between the first flow rate and the second flow rate by operating the first flow rate regulating section such that the temperature of the heating target liquid on the inlet side of the load side heat exchanger is kept constant.

According to the heating device, the flow rate of the heating target liquid on the outlet side of the load side heat exchanger can be regulated by the second flow rate regulating section being controlled in accordance with the temperature of the environment of the load side heat exchanger. When the temperature of the environment of the load side heat exchanger has risen, for example, it is possible to decrease the heat exchange amount at the load side heat exchanger by reducing the flow rate of the heating target liquid flowing back into the inlet of the load side heat exchanger via the return flow path from the outlet of the load side heat exchanger such that the difference between the temperature of the heating target liquid on the inlet side of the load side heat exchanger and the temperature of the heating target liquid on the outlet side of the load side heat exchanger is kept constant. Accordingly, it is possible to suppress a rise in the temperature of the heating target liquid on the outlet side of the load side heat exchanger. Accordingly, the temperature of the heating target liquid that is introduced from the outlet of the load side heat exchanger into the inlet of the heat exchange part can be kept low.

In the heating device according to a third aspect of the present invention, in the second aspect, the inlet side control unit may regulate the ratio between the first flow rate and the second flow rate by operating the first flow rate regulating section in accordance with a temperature of an environment in which the load side heat exchanger is installed.

According to the heating device, the temperature of the heating target liquid that is introduced back into the inlet of the heat exchange part from the outlet of the load side heat exchanger can be kept low. Further, it is possible to lower the temperature of the heating target liquid at the inlet of the load side heat exchanger by causing the first flow rate to become smaller than the second flow rate. Accordingly, it is possible to avoid the temperature of the heating target liquid at the outlet of the load side heat exchanger rising with the temperature of the environment in which the load side heat exchanger is installed. Accordingly, the temperature of the heating target liquid that is introduced from the outlet of the load side heat exchanger into the inlet of the heat exchange part can be further kept low.

A heating device according to a fourth aspect of the present invention may further include, in the first to third aspects described above, a storage tank storing the heating target liquid, having an upper portion connected to the circulation path between the outlet of the heat exchange part and the connecting part between the return flow path and the circulation path, and having a lower portion connected to the circulation path between the inlet of the heat exchange part and the connecting part between the return flow path and the circulation path and an operation control unit performing control for stopping and operating the heat exchange part in accordance with the amount of the heating target liquid that has reached a predetermined temperature or more in the upper portion of the storage tank.

Since the storage tank is provided, it is possible to discharge the heating target liquid that has a constant temperature toward the load side heat exchanger at all times while performing ON/OFF control at the heat exchange part. In addition, a CO₂ refrigerant heat pump device (CO₂ water heater) in which the storage tank is provided can be applied as it is to the heating device of the present aspect. Accordingly, the cost of the heating device can be reduced.

A CO₂ refrigerant heating device according to a fifth aspect of the present invention may further include, in the first to third aspects described above, an operation control unit regulating a heat exchange capacity of the heat exchange part in accordance with a temperature of an environment in which the load side heat exchanger is installed.

The heating target liquid that has a predetermined temperature can be discharged toward the load side heat exchanger at all times by the operation control unit even without a heating target liquid storage tank. In addition, the heating device can be simplified since no storage tank needs to be provided.

A heating method of a sixth aspect of the present invention is a heating method for heating a heating target liquid with a device, the device including a heat exchange part including a refrigerant circuit in which CO₂ as a refrigerant circulates while repeating condensation and evaporation, heating the heating target liquid introduced from an inlet, and discharging the heating target liquid from an outlet, a circulation path connected to the inlet and the outlet of the heat exchange part and allowing the heating target liquid to circulate, a load side heat exchanger cooling the heating target liquid by performing heat exchange with the heating target liquid in the circulation path, and a return flow path connecting the circulation path between an inlet side and an outlet side of the load side heat exchanger. The heating method includes a flow ratio regulation step of regulating a ratio between a flow rate of the heating target liquid flowing from the outlet of the load side heat exchanger toward the inlet of the load side heat exchanger via the return flow path and a flow rate of the heating target liquid flowing from the outlet of the heat exchange part toward the inlet of the load side heat exchanger in accordance with a temperature of an environment in which the load side heat exchanger is installed.

According to the heating method, the first flow rate is caused to become smaller than the second flow rate when, for example, the temperature of the environment of the load side heat exchanger has risen. As a result, it is possible to avoid the temperature of the heating target liquid at the outlet of the load side heat exchanger rising with the temperature of the environment in which the load side heat exchanger is installed. Accordingly, the temperature of the heating target liquid that is introduced from the outlet of the load side heat exchanger into the inlet of the heat exchange part can be kept low.

A heating method of a seventh aspect of the present invention is a heating method for heating a heating target liquid with a device, the device including a heat exchange part including a refrigerant circuit in which CO₂ as a refrigerant circulates while repeating condensation and evaporation, heating the heating target liquid introduced from an inlet, and discharging the heating target liquid from an outlet, a circulation path connected to the inlet and the outlet of the heat exchange part and allowing the heating target liquid to circulate, a load side heat exchanger cooling the heating target liquid by performing heat exchange with the heating target liquid in the circulation path, and a return flow path connecting the circulation path between an inlet side and an outlet side of the load side heat exchanger. The heating method includes a flow rate regulation step of regulating a flow rate of the heating target liquid on the outlet side of the load side heat exchanger such that a difference between a temperature of the heating target liquid on the inlet side of the load side heat exchanger and a temperature of the heating target liquid on the outlet side of the load side heat exchanger is kept constant and a flow ratio regulation step of regulating a ratio between a flow rate of the heating target liquid flowing from the outlet of the load side heat exchanger toward the inlet of the load side heat exchanger via the return flow path and a flow rate of the heating target liquid flowing from the outlet of the heat exchange part toward the inlet of the load side heat exchanger such that the temperature of the heating target liquid on the inlet side of the load side heat exchanger is kept constant.

According to the heating method, the flow rate of the heating target liquid flowing back into the inlet of the load side heat exchanger via the return flow path from the outlet of the load side heat exchanger is reduced when, for example, the temperature of the environment of the load side heat exchanger has risen. Then, the heat exchange amount at the load side heat exchanger decreases. As a result, the temperature of the heating target liquid on the inlet side of the load side heat exchanger is kept constant, and thus it is possible to suppress a rise in the temperature of the heating target liquid on the outlet side of the load side heat exchanger. Accordingly, the temperature of the heating target liquid that is introduced from the outlet of the load side heat exchanger into the inlet of the heat exchange part can be kept low.

In the heating method of an eighth aspect of the present invention, in the seventh aspect described above, the ratio between the flow rate of the heating target liquid flowing from the outlet of the load side heat exchanger toward the inlet of the load side heat exchanger via the return flow path and the flow rate of the heating target liquid flowing from the outlet of the heat exchange part toward the inlet of the load side heat exchanger may be further regulated in accordance with a temperature of an environment in which the load side heat exchanger is installed in the flow ratio regulation step.

According to the heating method, the temperature of the heating target liquid that is introduced into the inlet of the heat exchange part from the outlet of the load side heat exchanger can be kept low by the flow rate of the heating target liquid flowing back into the inlet of the load side heat exchanger via the return flow path from the outlet of the load side heat exchanger being reduced. Accordingly, it is possible to avoid the temperature of the heating target liquid at the outlet of the load side heat exchanger rising with the temperature of the environment in which the load side heat exchanger is installed. Accordingly, the temperature of the heating target liquid that is introduced from the outlet of the load side heat exchanger into the inlet of the heat exchange part can be further kept low.

### Advantageous Effects of Invention

According to the heating device and the heating method described above, it is possible to improve the COP at the heat exchange part and maintain high efficiency even in the case of load variations.

### Brief Description of Drawings

Fig. 1 is an overall configuration diagram of a heating device of a first embodiment of the present invention.

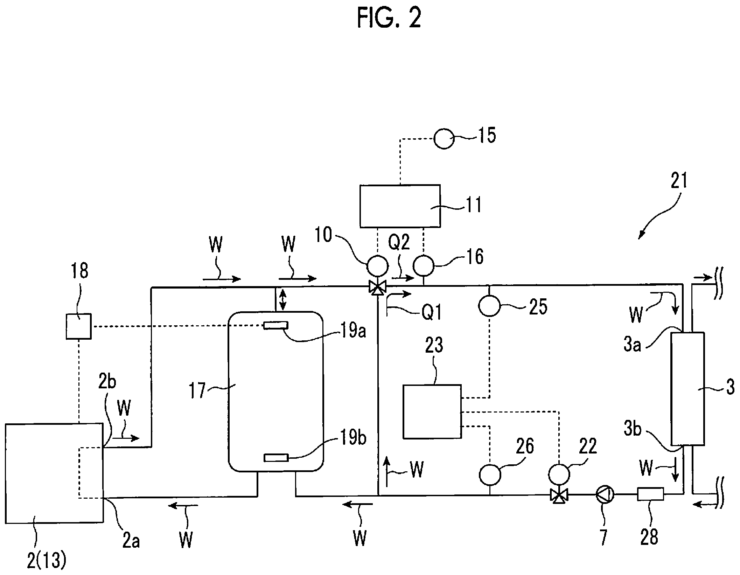

Fig. 2 is an overall configuration diagram of a heating device of a second embodiment of the present invention.
Fig. 3 is an overall configuration diagram of a heating device of a third embodiment of the present invention.
Fig. 4 is an overall configuration diagram of a heating device of a fourth embodiment of the present invention.

### Description of Embodiments

### [First Embodiment]

Hereinafter, a heating device 1 of a first embodiment of the present invention will be described.

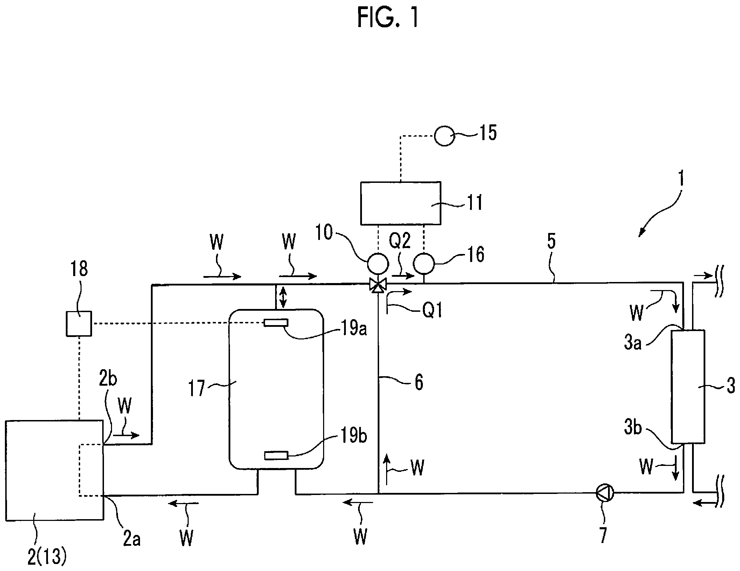

As illustrated in Fig. 1, the heating device 1 according to the present embodiment is provided with a heat exchange part 2 heating water (heating target liquid) W, a load side heat exchanger 3 cooling the water W by performing heat exchange with the heated water (hot water) W, a circulation path 5 interconnecting the heat exchange part 2 and the load side heat exchanger 3 and allowing the water W to circulate, a return flow path 6, a first flow rate regulating section (flow rate regulating section) 10, and a hot water storage tank (storage tank) 17 provided on the circulation path 5, an inlet side control unit 11 including an MPU or the like and controlling the first flow rate regulating section 10, and an operation control unit 18 including an MPU or the like and controlling operation of the heat exchange part 2.

The heat exchange part 2 has a refrigerant circuit 13 in which CO₂ (carbon dioxide) circulates as a refrigerant. The refrigerant circuit 13 is a heat pump having a compressor (not illustrated), a heat exchanger, piping, and the like. CO₂ circulates in the refrigerant circuit 13 while repeating condensation and evaporation. The water W is heated and discharged from an outlet 2b after the water W is introduced from an inlet 2a of the heat exchange part 2 as a result.

The load side heat exchanger 3 is, for example, a floor heating panel. The temperature of the environment in which the load side heat exchanger 3 is provided (indoor temperature and outside air temperature) seasonally varies. The load on the load side heat exchanger 3 decreases and the amount of heat exchange with the water (hot water) W heated at the heat exchange part 2 decreases during the day and seasons that are not so cold.

The circulation path 5 is a pipeline that interconnects the outlet 2b of the heat exchange part 2 and an inlet 3a of the load side heat exchanger 3 and interconnects an outlet 3b of the load side heat exchanger 3 and the inlet 2a of the heat exchange part 2. As a result, the water W circulates between the heat exchange part 2 and the load side heat exchanger 3.

The return flow path 6 connects the circulation path 5 between the inlet 3a side and the outlet 3b side of the load side heat exchanger 3. In other words, the return flow path 6 connects the circulation path 5 between the outlet 2b of the heat exchange part 2 and the inlet 3a of the load side heat exchanger 3 and between the inlet 2a of the heat exchange part 2 and the outlet 3b of the load side heat exchanger 3. As a result, the water W from the outlet 3b of the load side heat exchanger 3 circulates toward the inlet 3a of the load side heat exchanger 3 via the return flow path 6 in part and the rest of the water W circulates toward the inlet 2a of the heat exchange part 2 in part.

In the present embodiment, a circulation pump 7 is provided on the outlet 3b side of the load side heat exchanger 3 and closer to the load side heat exchanger 3 side than the parts where the return flow path 6 and the circulation path 5 are interconnected.

The first flow rate regulating section 10 is, for example, a three-way valve. The first flow rate regulating section 10 is provided at the connecting part between the return flow path 6 and the circulation path 5 that is on the inlet 3a side of the load side heat exchanger 3. The first flow rate regulating section 10 is capable of regulating the flow rate of the water W that flows from the outlet 3b of the load side heat exchanger 3 toward the inlet 3a of the load side heat exchanger 3 via the return flow path 6 (first flow rate Q1) and the flow rate of the water W that flows from the outlet 2b of the heat exchange part 2 toward the inlet 3a of the load side heat exchanger 3 (second flow rate Q2).

The inlet side control unit 11 operates the first flow rate regulating section 10 in accordance with the temperature of the environment in which the load side heat exchanger 3 is installed. Then, the ratio between the first flow rate Q1 and the second flow rate Q2 is regulated. The inlet side control unit 11 actively regulates the temperature of the water W that is supplied to the inlet 3a of the load side heat exchanger 3 by appropriately regulating the ratio between the first flow rate Q1 and the second flow rate Q2. The temperature of the environment in which the load side heat exchanger 3 is installed is acquired from, for example, an outside temperature sensor 15 measuring the outside air temperature or the like. The temperature of the water W that is supplied to the inlet 3a of the load side heat exchanger 3 (tapping temperature) is measured by a temperature sensor 16, which is installed between the first flow rate regulating section 10 and the inlet 3a of the load side heat exchanger 3 on the circulation path 5.

A table is pre-stored in the inlet side control unit 11. The table indicates, for example, the relationship between the outside air temperature and a tapping temperature for ensuring a heat quantity corresponding to the outside air temperature and required at the load side heat exchanger 3 (temperature of the water W introduced into the load side heat exchanger 3). The pre-storage of the table is to determine how many times the water W (hot water) should be supplied to the load side heat exchanger 3 with respect to the outside air temperature.

The hot water storage tank (storage tank) 17 is provided on the circulation path 5 and stores the water (hot water) W. More specifically, the upper portion of the hot water storage tank 17 is connected to the circulation path 5 between the part where the circulation path 5 and the return flow path 6 are interconnected and the outlet 2b of the heat exchange part 2 and the lower portion of the hot water storage tank 17 is connected to the circulation path 5 between the part where the circulation path 5 and the return flow path 6 are interconnected and the inlet 2a of the heat exchange part 2. The water (hot water) W that has a high temperature and the water W that has a low temperature are stored in the upper and lower portions in the hot water storage tank 17, respectively. An upper temperature sensor 19a is provided on the side wall surface of the upper portion of the hot water storage tank 17. A lower temperature sensor 19b is provided on the side wall surface of the lower portion of the hot water storage tank 17.

The operation control unit 18 stops or initiates operation of a compressor (not illustrated) of the heat exchange part 2 on the basis of whether or not the temperature of the water (hot water) W in the hot water storage tank 17 is equal to or higher than a predetermined temperature at the height position where the upper temperature sensor 19a is provided. In other words, the operation control unit 18 stops or initiates operation of a compressor (not illustrated) of the heat exchange part 2 on the basis of whether or not the amount of the water (hot water) W at or above a predetermined temperature has reached the water amount up to the height position of the upper temperature sensor 19a.

More specifically, the operation control unit 18 performs ON/OFF control on the heat exchange part 2 such that the heat exchange part 2 stops operating in a case where it is measured by the upper temperature sensor 19a that the temperature of the water (hot water) W in the hot water storage tank 17 has become equal to or higher than a predetermined temperature and the operation of the heat exchange part 2 is initiated in a case where the temperature of the water (hot water) W has become lower than a predetermined temperature.

Although the "predetermined temperature" may be 60 degrees or more and 90 degrees or less, the "predetermined temperature" may be a temperature of at least 60 degrees. Accordingly, the water W (hot water) having a predetermined temperature of, for example, 60 degrees or more is supplied from the hot water storage tank 17 to the circulation path 5 at all times and the water circulates toward the first flow rate regulating section 10.

Next, the procedure of a heating method for heating the water W in the present embodiment will be described.

First, the inlet side control unit 11 determines the heat exchange amount that is required at the load side heat exchanger 3 on the basis of the measurement value of the outside temperature sensor 15. Subsequently, the inlet side control unit 11 determines the tapping temperature on the basis of the table.

The load on the load side heat exchanger 3 decreases during the day and seasons that are not so cold. Accordingly, in such a case, 30 degrees needs to be set from, for example, a state where operation is performed with the temperature of the water (hot water) W flowing into the load side heat exchanger 3 at 35 degrees.

In this regard, the inlet side control unit 11 causes the flow rate of the water (hot water) W flowing back into the inlet 3a of the load side heat exchanger 3 via the return flow path 6 from the outlet 3b of the load side heat exchanger 3 (first flow rate Q1) to become smaller than the flow rate of the water (hot water) W passing through the first flow rate regulating section 10 via the hot water storage tank 17 from the outlet 2b of the heat exchange part 2 and flowing toward the inlet 3a of the load side heat exchanger 3 (second flow rate Q2) (flow ratio regulation step). Then, the temperature of the water (hot water) W flowing into the load side heat exchanger 3 falls from, for example, 35 degrees to 30 degrees.

According to the heating device 1 of the present embodiment described above, the first flow rate regulating section 10 is controlled in accordance with the temperature of the environment of the load side heat exchanger 3 and the first flow rate Q1 is caused to become smaller than the second flow rate Q2 as described above when, for example, the temperature of the environment of the load side heat exchanger 3 has risen. Then, the temperature of the water W at the inlet 3a of the load side heat exchanger 3 can be lowered.

As a result, it is possible to avoid the temperature of the water W at the outlet 3b of the load side heat exchanger 3 rising with the temperature of the environment in which the load side heat exchanger 3 is installed. Accordingly, the temperature of the water W that is introduced from the outlet 3b of the load side heat exchanger 3 into the inlet 2a of the heat exchange part 2 can be kept low. Accordingly, the temperature difference between the inlet 2a and the outlet 2b of the heat exchange part 2 can be increased and a high COP can be maintained for the heating device 1 even in a case where the load on the load side heat exchanger 3 varies. Accordingly, efficiency enhancement can be achieved even in a case where the load varies.

### [Second Embodiment]

Next, a heating device 21 of a second embodiment of the present invention will be described. In the following description of the second embodiment, parts identical to those of the first embodiment are denoted by the same reference numerals so that the same description is not repeated. The second embodiment is different from the first embodiment in that a second flow rate regulating section 22 and an outlet side control unit 23 including an MPU or the like are provided in addition to the configuration of the first embodiment. The function of the inlet side control unit 11 according to the second embodiment differs from the function of the inlet side control unit 11 according to the first embodiment.

The second flow rate regulating section 22 is a valve, an inverter pump, or the like. The circulation pump 7 is unnecessary in a case where an inverter pump is used for the second flow rate regulating section 22. The second flow rate regulating section 22 is provided on the outlet 3b side of the load side heat exchanger 3 and closer to the load side heat exchanger 3 side than the parts where the return flow path 6 and the circulation path 5 are interconnected. In other words, the second flow rate regulating section 22 is provided between the outlet 3b of the load side heat exchanger 3 and the first flow rate regulating section 10. The second flow rate regulating section 22 regulates the flow rate of the water W on the outlet 3b side of the load side heat exchanger 3.

In the present embodiment, a flow rate sensor 28 is provided on the circulation path 5 between the outlet 3b of the load side heat exchanger 3 and the second flow rate regulating section 22. An inlet side temperature sensor 25 is provided between the first flow rate regulating section 10 and the load side heat exchanger 3 and an outlet side temperature sensor 26 is provided between the outlet 3b of the load side heat exchanger 3 and the return flow path 6. The inlet side temperature sensor 25 and the temperature sensor 16 monitored by the inlet side control unit 11 may be used in common.

The outlet side control unit 23 operates the second flow rate regulating section 22 in accordance with the temperature of the environment in which the load side heat exchanger 3 is installed and on the basis of the measured value of the outside temperature sensor 15. In other words, the outlet side control unit 23 operates the second flow rate regulating section 22 such that the temperature difference between the inlet side temperature sensor 25 and the outlet side temperature sensor 26 is constant at all times.

Unlike in the first embodiment, the inlet side control unit 11 regulates the ratio between the first flow rate Q1 and the second flow rate Q2 by operating the first flow rate regulating section 10 such that the temperature of the water (hot water) W on the inlet 3a side of the load side heat exchanger 3 is kept constant.

Next, the procedure of a heating method for heating the water W in the present embodiment will be described.

First, the flow rate of the water W on the outlet 3b side of the load side heat exchanger 3 is determined, while the measured values of the inlet side temperature sensor 25, the outlet side temperature sensor 26, and the flow rate sensor 28 are observed, such that the difference between the temperature of the water W on the inlet 3a side of the load side heat exchanger 3 and the temperature of the water W on the outlet 3b side of the load side heat exchanger 3 is kept constant.

At this time, the inlet side control unit 11 regulates the ratio between the first flow rate Q1 and the second flow rate Q2 such that the temperature of the water W (hot water) at the inlet 3a of the load side heat exchanger 3 is constant at all times (flow ratio regulation step).

The load on the load side heat exchanger 3 decreases during the day and seasons that are not so cold. Accordingly, in a case where the flow rate of the water W circulating through the load side heat exchanger 3 does not change, the temperature of the water W on the outlet 3b side of the load side heat exchanger 3 rises. Accordingly, on such a day, the temperature difference between the inlet 3a side and the outlet 3b side of the load side heat exchanger 3 needs to be kept constant so that a rise in the temperature of the water W on the outlet 3b side of the load side heat exchanger 3 is suppressed and the water W on the outlet 3b side of the load side heat exchanger 3 is kept in a low-temperature state by means of a decrease in heat exchange amount at the load side heat exchanger 3. Necessary in this regard is, for example, a transition from a state where operation is performed with the water (hot water) W flowing into the load side heat exchanger 3 having a flow rate of 1 to a state where operation is performed with the water (hot water) W flowing into the load side heat exchanger 3 having a flow rate of 0.8.

The outlet side control unit 23 causes the flow rate of the water W circulating through the load side heat exchanger 3 to reach 0.8 by operating the second flow rate regulating section 22 on the outlet 3b side of the load side heat exchanger 3 (flow rate regulation step). The second flow rate Q2 decreases at this time, and thus the ratio between the second flow rate Q2 and the first flow rate Q1 changes and the temperature of the water (hot water) W flowing into the inlet 3a of the load side heat exchanger 3 from the first flow rate regulating section 10 falls. However, the temperature of the water W on the inlet 3a side of the load side heat exchanger 3 is kept constant by the first flow rate regulating section 10 being controlled by the inlet side control unit 11. As a result, a rise in the temperature of the water W on the outlet 3b side of the load side heat exchanger 3 is prevented.

According to the heating device 21 of the present embodiment described above, the flow rate of the water W on the outlet 3b side of the load side heat exchanger 3 can be regulated by the second flow rate regulating section 22 being controlled in accordance with the temperature of the environment of the load side heat exchanger 3. Accordingly, the temperature of the water W that is introduced from the outlet 3b of the load side heat exchanger 3 into the inlet 2a of the heat exchange part 2 can be kept low. Accordingly, a high COP can be maintained for the heating device 21. In other words, efficiency enhancement can be achieved even in the case of the load variations.

In addition, it is possible to circulate the water W that has a constant temperature toward the load side heat exchanger 3 at all times since the hot water storage tank 17 is provided. Further, a CO₂ refrigerant heat pump device (CO₂ water heater) in which the hot water storage tank 17 is provided can be applied as it is to the heating device 21 of the present embodiment. Accordingly, the cost of the heating device 21 can be reduced.

### [Third Embodiment]

Next, a heating device 31 of a third embodiment of the present invention will be described. In the following description of the third embodiment, parts identical to those of the first and second embodiments are denoted by the same reference numerals so that the same description is not repeated. The third embodiment is provided with both the configuration of the first embodiment and the configuration of the second embodiment.

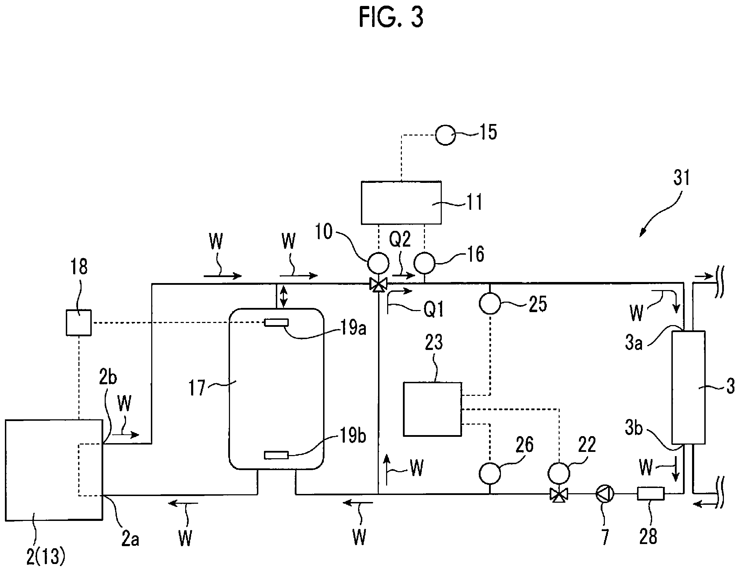

In other words and as illustrated in Fig. 3, the heating device 31 according to the present embodiment is provided with the heat exchange part 2 heating the water W, the load side heat exchanger 3 cooling the water W by performing heat exchange with the heated water (hot water) W, the circulation path 5 interconnecting the heat exchange part 2 and the load side heat exchanger 3 and allowing the water W to circulate, the return flow path 6, the first flow rate regulating section (flow rate regulating section) 10, the second flow rate regulating section 22, and the hot water storage tank (storage tank) 17 provided on the circulation path 5, the inlet side control unit 11 controlling the first flow rate regulating section 10, the outlet side control unit 23 controlling the second flow rate regulating section 22, and the operation control unit 18 controlling operation of the heat exchange part 2.

According to the heating device 31 of the present embodiment described above, it is possible to increase the temperature difference between the inlet 2a and the outlet 2b of the heat exchange part 2 by using the inlet side control unit 11 even in a case where the load on the load side heat exchanger 3 varies as described in the other embodiments described above. Accordingly, a high COP can be maintained for the heating device 31 and efficiency enhancement can be achieved. In addition, the temperature of the water W that is introduced from the outlet 3b of the load side heat exchanger 3 into the inlet 2a of the heat exchange part 2 can be kept low by the outlet side control unit 23. Accordingly, a high COP can be maintained for the heating device 31 and efficiency enhancement can be achieved.

### [Fourth Embodiment]

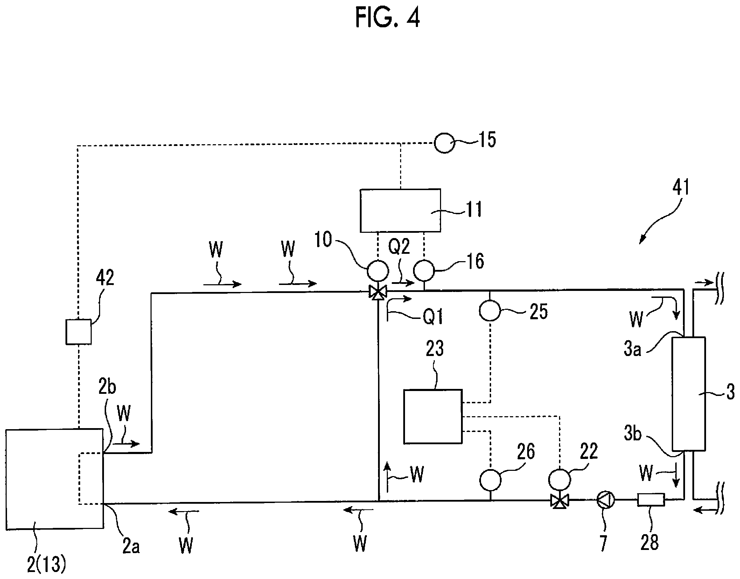

Next, a heating device 41 of a fourth embodiment of the present invention will be described. In the following description of the fourth embodiment, parts identical to those of the first to third embodiments are denoted by the same reference numerals so that the same description is not repeated. The fourth embodiment is not provided with the hot water storage tank 17, unlike the third embodiment, as illustrated in Fig. 4.

In the present embodiment, an operation control unit 42 regulates the heat exchange capacity of the heat exchange part 2 in accordance with the temperature of the environment in which the load side heat exchanger 3 is installed. More specifically, the operation control unit 42 appropriately regulates the temperature of the water (hot water) W that is discharged from the outlet 2b of the heat exchange part 2 by regulating the rotation speed of the compressor of the refrigerant circuit 13.

According to the heating device 41 of the present embodiment described above, the water W that has a predetermined temperature can be discharged from the heat exchange part 2 at all times by the operation control unit 42 even without a hot water storage tank storing the water W.

In addition, the heating device 41 can be simplified since no hot water storage tank needs to be provided.

Here, the heating device 41 that has no hot water storage tank as in the present embodiment may be applied to the first embodiment or to the second embodiment.

Although embodiments of the present invention have been described in detail with reference to the drawings, the configurations of each embodiment, combinations of the configurations, and the like are examples, and addition, omission, substitution, and other changes in terms of configuration are possible without departing from the spirit of the present invention. The present invention is not limited by the embodiments. The present invention is limited only by the claims.

For example, the first flow rate regulating section 10 and the second flow rate regulating section 22 may be manually operated without the inlet side control unit 11 and the outlet side control unit 23 being used.

### Industrial Applicability

According to the heating device and the heating method described above, high efficiency can be maintained even in the case of load variations.

### Reference Signs List

- 1: Heating device
- 2: Heat exchange part
- 2a: Inlet
- 2b: Outlet
- 3: Load side heat exchanger
- 3a: Inlet
- 3b: Outlet
- 5: Circulation path
- 6: Return flow path
- 7: Circulation pump
- 10: First flow rate regulating section
- 11: Inlet side control unit
- 13: Refrigerant circuit
- 15: Outside temperature sensor
- 16: Temperature sensor
- 17: Hot water storage tank (storage tank)
- 18: Operation control unit
- 19a: Upper temperature sensor
- 19b: Lower temperature sensor
- 21: Heating device
- 22: Second flow rate regulating section
- 23: Outlet side control unit
- 25: Inlet side temperature sensor
- 26: Outlet side temperature sensor
- 28: Flow rate sensor
- 31: Heating device
- 41: Heating device
- 42: Operation control unit
- Q1: First flow rate
- Q2: Second flow rate
- W: Water

## Claims

1. A heating device comprising:
a heat exchange part including a refrigerant circuit in which CO₂ as a refrigerant circulates while repeating condensation and evaporation, heating a heating target liquid introduced from an inlet, and discharging the heating target liquid from an outlet;
a circulation path connected to the inlet and the outlet of the heat exchange part and allowing the heating target liquid to circulate;
a load side heat exchanger cooling the heating target liquid by performing heat exchange with the heating target liquid in the circulation path;
a return flow path connecting the circulation path between an inlet side and an outlet side of the load side heat exchanger;
a flow rate regulating section provided at a connecting part between the return flow path and the circulation path on the inlet side of the load side heat exchanger and capable of regulating a first flow rate and a second flow rate, the first flow rate being a flow rate of the heating target liquid flowing from the outlet of the load side heat exchanger toward the inlet of the load side heat exchanger via the return flow path and the second flow rate being a flow rate of the heating target liquid flowing from the outlet of the heat exchange part toward the inlet of the load side heat exchanger; and
a control unit regulating a ratio between the first flow rate and the second flow rate by operating the flow rate regulating section in accordance with a temperature of an environment in which the load side heat exchanger is installed.

2. A heating device comprising:
a heat exchange part including a refrigerant circuit in which CO₂ as a refrigerant circulates while repeating condensation and evaporation, heating a heating target liquid introduced from an inlet, and discharging the heating target liquid from an outlet;
a circulation path connected to the inlet and the outlet of the heat exchange part and allowing the heating target liquid to circulate;
a load side heat exchanger cooling the heating target liquid by performing heat exchange with the heating target liquid in the circulation path;
a return flow path connecting the circulation path between an inlet side and an outlet side of the load side heat exchanger;
a first flow rate regulating section provided at a connecting part between the return flow path and the circulation path on the inlet side of the load side heat exchanger and capable of regulating a first flow rate and a second flow rate, the first flow rate being a flow rate of the heating target liquid flowing from the outlet of the load side heat exchanger toward the inlet of the load side heat exchanger via the return flow path and the second flow rate being a flow rate of the heating target liquid flowing from the outlet of the heat exchange part toward the inlet of the load side heat exchanger;
a second flow rate regulating section provided between the first flow rate regulating section and the outlet of the load side heat exchanger and capable of regulating the flow rate of the heating target liquid on the outlet side of the load side heat exchanger;
an outlet side control unit regulating the flow rate of the heating target liquid on the outlet side of the load side heat exchanger by operating the second flow rate regulating section such that a difference between a temperature of the heating target liquid on the inlet side of the load side heat exchanger and a temperature of the heating target liquid on the outlet side of the load side heat exchanger is kept constant; and
an inlet side control unit regulating a ratio between the first flow rate and the second flow rate by operating the first flow rate regulating section such that the temperature of the heating target liquid on the inlet side of the load side heat exchanger is kept constant.

3. The heating device according to Claim 2, wherein the inlet side control unit regulates the ratio between the first flow rate and the second flow rate by operating the first flow rate regulating section in accordance with a temperature of an environment in which the load side heat exchanger is installed.

4. The heating device according to any one of Claims 1 to 3, further comprising:
a storage tank storing the heating target liquid, having an upper portion connected to the circulation path between the outlet of the heat exchange part and the connecting part between the return flow path and the circulation path, and having a lower portion connected to the circulation path between the inlet of the heat exchange part and the connecting part between the return flow path and the circulation path; and
an operation control unit performing control for stopping and operating the heat exchange part in accordance with the amount of the heating target liquid that has reached a predetermined temperature or more in the upper portion of the storage tank.

5. The heating device according to any one of Claims 1 to 3, further comprising:
an operation control unit regulating a heat exchange capacity of the heat exchange part in accordance with a temperature of an environment in which the load side heat exchanger is installed.

6. A heating method for heating a heating target liquid with a device, the device including
a heat exchange part including a refrigerant circuit in which CO₂ as a refrigerant circulates while repeating condensation and evaporation, heating the heating target liquid introduced from an inlet, and discharging the heating target liquid from an outlet,
a circulation path connected to the inlet and the outlet of the heat exchange part and allowing the heating target liquid to circulate,
a load side heat exchanger cooling the heating target liquid by performing heat exchange with the heating target liquid in the circulation path, and
a return flow path connecting the circulation path between an inlet side and an outlet side of the load side heat exchanger,
the heating method comprising:
a flow ratio regulation step of regulating a ratio between a flow rate of the heating target liquid flowing from the outlet of the load side heat exchanger toward the inlet of the load side heat exchanger via the return flow path and a flow rate of the heating target liquid flowing from the outlet of the heat exchange part toward the inlet of the load side heat exchanger in accordance with a temperature of an environment in which the load side heat exchanger is installed.

7. A heating method for heating a heating target liquid with a device, the device including
a heat exchange part including a refrigerant circuit in which CO₂ as a refrigerant circulates while repeating condensation and evaporation, heating the heating target liquid introduced from an inlet, and discharging the heating target liquid from an outlet,
a circulation path connected to the inlet and the outlet of the heat exchange part and allowing the heating target liquid to circulate,
a load side heat exchanger cooling the heating target liquid by performing heat exchange with the heating target liquid in the circulation path, and
a return flow path connecting the circulation path between an inlet side and an outlet side of the load side heat exchanger, the heating method comprising:
a flow rate regulation step of regulating a flow rate of the heating target liquid on the outlet side of the load side heat exchanger such that a difference between a temperature of the heating target liquid on the inlet side of the load side heat exchanger and a temperature of the heating target liquid on the outlet side of the load side heat exchanger is kept constant; and
a flow ratio regulation step of regulating a ratio between a flow rate of the heating target liquid flowing from the outlet of the load side heat exchanger toward the inlet of the load side heat exchanger via the return flow path and a flow rate of the heating target liquid flowing from the outlet of the heat exchange part toward the inlet of the load side heat exchanger such that the temperature of the heating target liquid on the inlet side of the load side heat exchanger is kept constant.

8. The heating method according to Claim 7, wherein the ratio between the flow rate of the heating target liquid flowing from the outlet of the load side heat exchanger toward the inlet of the load side heat exchanger via the return flow path and the flow rate of the heating target liquid flowing from the outlet of the heat exchange part toward the inlet of the load side heat exchanger is further regulated in accordance with a temperature of an environment in which the load side heat exchanger is installed in the flow ratio regulation step.
